**Europäisches Patentamt**

**European Patent Office**

**Office européen des brevets**

(19)

(11) Veröffentlichungsnummer: **0 231 802**

**A2**

# (12) EUROPÄISCHE PATENTANMELDUNG

(21) Anmeldenummer: **87100663.1**

(22) Anmeldetag: **20.01.87**

(51) Int. Cl.⁴: **B60K 17/10** , B60K 17/356

(30) Priorität: **05.02.86 US 826459**

(43) Veröffentlichungstag der Anmeldung:
**12.08.87 Patentblatt 87/33**

(84) Benannte Vertragsstaaten:
**AT BE CH DE ES FR GB IT LI NL SE**

(71) Anmelder: **DEERE & COMPANY**
**1 John Deere Road**
**Moline Illinois 61265(US)**

(72) Erfinder: **Delfs, Larry Marvin**
**1348 Clark Drive**
**Cedar Falls Iowa 50613(US)**

(74) Vertreter: **Feldmann, Bernhard**
**DEERE & COMPANY European Office, Patent**
**Department Steubenstrasse 36-42 Postfach**
**503**
**D-6800 Mannheim 1(DE)**

(54) **Hydraulisches Antriebssystem.**

(57) Ein hydraulisches Antriebssystem für den Antrieb von ersten hauptsächlichen und zweiten zusätzlich antreibbaren Rädern (14L, 14R) mittels erster und zweiter Motoren (30, 72) enthält Druckregelventile (46, 46'), die in Abhängigkeit von dem eingangs der zweiten Motoren (72) anstehenden Druck eine weitere Druckflüssigkeitszufuhr zu den zweiten Motoren (72) verhindern, sobald ein bestimmter Auslegedruck erreicht ist.

Fig. I

EP 0 231 802 A2

## Hydraulisches Antriebssystem

Die Erfindung betrifft ein hydraulisches Antriebssystem für antreibbare zweite Räder eines Kraftfahrzeuges mit einer Pumpe, einem ersten Motor für erste Räder und mindestens einem zweiten Motor für die zweiten Räder.

In einem bekannten hydraulischen Antriebssystem (US-A-4 140 196) ist eine Pumpe für einen hydraulischen Motor, der ersten hauptsächlichen Rädern zugeordnet ist, und für zweite Motoren, die auf zusätzlich antreibbare zweite Räder wirken, vorgesehen. Von der Pumpe aus erstrecken sich in paralleler Anordnung Leitungen zu den Motoren, wobei die zu den zweiten Motoren führenden Leitungen mittels eines Ventils geschlossen werden können, so daß nur den ersten Rädern unter Druck stehende Flüssigkeit zugeführt wird. Zwischen der Pumpe und den zweiten Motoren sind Mengenbegrenzer vorgesehen, die den Motoren der zweiten Räder nur einen bestimmten Teil der von der Pumpe lieferbaren Menge zukommen lassen.

Dieses hydraulische Antriebssystem hat den Nachteil, daß die zusätzlich antreibbaren Räder bei Fahrzeugen mit sehr unterschiedlichen Radlasten mit einem zu hohen Drehmoment angetrieben werden, solange die von der Pumpe geförderte Flüssigkeitsmenge ausreicht und die den zweiten Motoren zugeführte Flüssigkeitsmenge den am Mengenbegrenzer eingestellten Wert nicht überschreitet.

Die der Erfindung zugrunde liegende Aufgabe wird darin gesehen, bei einem derartigen Antriebssystem die nachteiligen Folgen, die durch ein hohes an den zusätzlichen Rädern anstehendes Drehmoment, wie leichtes Durchdrehen auf - schmierigem oder glattem Untergrund, entstehen, zu vermeiden.

Diese Aufgabe ist durch die erfindungsgemäße Lehre nach Patentanspruch 1 gelöst worden.

Auf diese Weise wird nur ein Drehmoment bis zu einer von dem Druck abhängigen und somit einstellbaren Größe erzeugt, und es wird vermieden, daß das oder die Räder auf einem Untergrund mit schlechter Haftung durchdrehen. Der einzustellende Druck kann dann abhängig gemacht werden von der jeweils zu erwartenden Radlast auf den zusätzlich anzutreibenden zweiten Rädern.

In den Unteransprüchen sind die Erfindung fortentwickelnde Merkmale genannt, die insbesondere folgende Vorteile erbringen.

Die Funktion und das Ansprechverhalten der Druckregelventile sind optimal, wenn von dem eingangs der zweiten Motoren anstehenden Druck ausgegangen wird, was mittels elektrischer Fühlmittel oder mittels hydraulischer Steuerleitungen erfolgen kann.

Um bei einem Durchdrehen der den zweiten Motoren zugeordneten Räder einen übermäßigen Druck an der Ausgangsseite der zweiten Motoren zu verhindern, sind die Maßnahmen gemäß den Ansprüchen 3 und 4 vorgesehen, wobei der Überdruck entweder durch Abströmenlassen zur Eingangsseite des anderen zweiten Motors oder durch eine teilweise Rückleitung der Flüssigkeit zum Eingang der Pumpe abgebaut wird.

Die Maßnahmen der Ansprüche 3 und 4 werden auf einfache Weise durch ein Druckregelventil gemäß Anspruch 5 verwirklicht, wobei die Druckregelventile gleichzeitig zur Ein-und Ausschaltsteuerung der zweiten Motoren benutzt werden können, indem sie nämlich mittels einer separaten Betätigungseinrichtung in eine die Strömung von Druckflüssigkeit zu den Motoren verhindernde Stellung gebracht werden.

Um zu verhindern, daß Druckflüssigkeit von der Pumpe direkt zu der Ausgangsseite der Motoren gelangen kann, während ein sich beim Durchrutschen der zusätzlich antreib baren Räder an der Ausgangsseite der zweiten Motoren aufbauender Flüssigkeitsdruck zu der Eingangsseite der Pumpe abbaut, sind die Rückschlagventile gemäß Patentanspruch 7 vorgesehen.

In der Zeichnung ist ein nachfolgend näher beschriebenes Ausführungsbeispiel der Erfindung dargestellt. Es zeigt:

Figur 1 ein erfindungsgemäßes hydraulisches Antriebssystem in schematischer Darstellung und

Figur 2 einen Teil des Antriebssystems nach Figur 1 in einer abgewandelten Ausführung.

Ein erfindungsgemäßes hydraulisches Antriebssystem, das zum Antrieb von ersten vorderen und hauptsächlich angetriebenen Rädern und zweiten rückwärtigen und zusätzlich antreibbaren Rädern eines Mähdreschers dienen kann, enthält eine Pumpe 28, deren Förderrichtung umkehrbar und deren Förderleistung verstellbar ist, und einen drehrichtungsumkehrbaren ersten Motor 30. Die sich gegenüberliegenden Anschlüsse der Pumpe 28 und des ersten Motors 30 sind über Leitungen 32 und 34 verbunden, die wahlweise als Speise- oder als Rückführungsleitungen dienen, und zwar abhängig davon, in welcher Richtung die Pumpe 28 Druckflüssigkeit fördert. Die Pumpe 28 wird von einer nicht gezeigten Antriebsmaschine in herkömmlicher Weise angetrieben, und der Motor 30 ist mit Achsen 36 für die ersten nicht gezeigten Räder über ein Schaltgetriebe und eine Differentialeinheit 38 verbunden.

Das Antriebssystem enthält für die zusätzlich antreibbaren und lenkbaren Räder 14R, 14L eine rechte und eine linke hydrostatische Antriebseinheit 69 und 70, die sich in ihrem Aufbau entsprechen und von denen jede einen zweiten Motor 72 in der Art eines Hydraulikmotors aufweist. Die Motoren 72 der hydrostatischen Antriebseinheiten 69, 70 sind mit den zweiten Rädern 14R, 14L zugeordneten Reduktionsgetriebeeinheiten 76 verbunden.

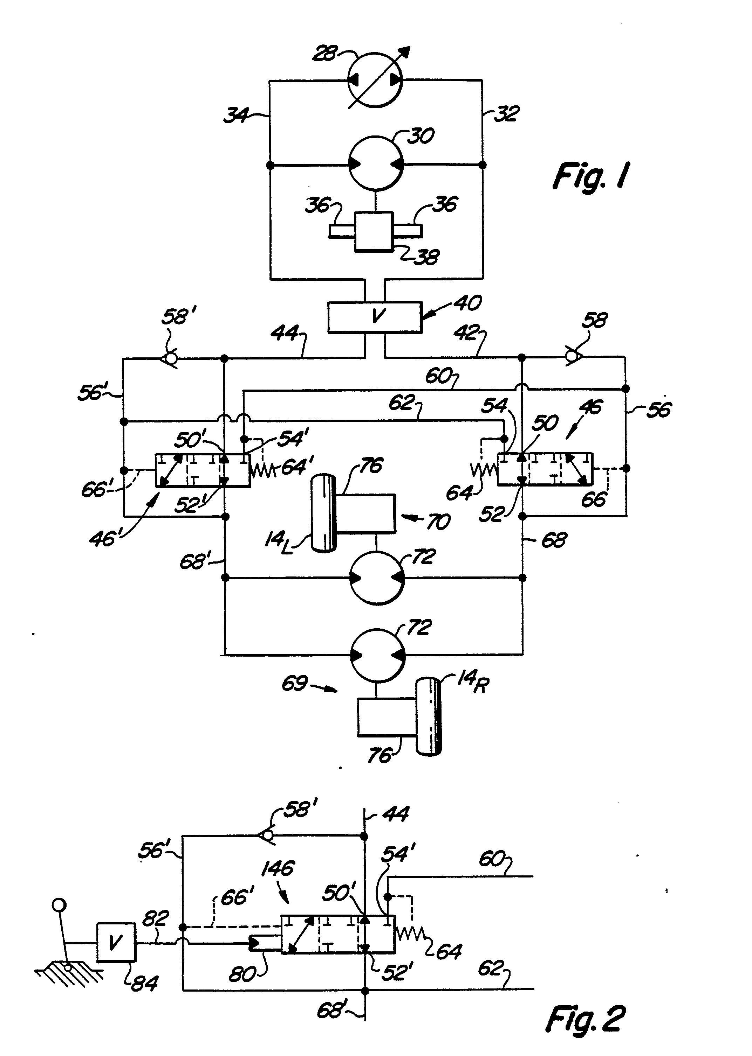

Ein bekanntes als Zweistellungsventil ausgebildetes Ventil 40 steuert die Verbindung der Leitungen 32 und 34 mit den Antriebseinheiten 69, 70 über Leitungen 42 und 44 und erlaubt oder unterbindet einen Flüssigkeitsfluß zu den zweiten Motoren 72. Gemäß der Erfindung sind Druckregelventile 46 und 46' zwischen die Motoren 72 und das Ventil 40 geschaltet, die insbesondere den Aufbau eines ungewollt hohen Drucks an den Motoren 72 vermeiden. Die Druckregelventile 46 bzw. 46' sind mit Anschlüssen 50 bzw. 50', in die die Leitungen 42, 44 münden, mit Anschlüssen 52 bzw. 52', die mit der Ein-und Ausgangsseite der Motoren 72 verbunden sind, und mit Anschlüssen 54 bzw. 54' versehen. Die Anschlüsse 52 und 52' sind mit den Leitungen 42 und 44 über Nebenleitungen 56 bzw. 56' verbunden. Zudem sind Rückschlagventile 58 bzw. 58' vorgesehen, die einen Rückstrom von Druckflüssigkeit aus den Motoren 72 in die Leitungen 42, 44 zulassen. Eine Leitung 60 verbindet die Nebenleitung 56 mit dem Anschluß 54', und eine Leitung 62 verbindet die Nebenleitung 56' mit dem Anschluß 54. Die Druckregelventile 46 bzw. 46' werden von Federn 64 bzw. 64' in ihren in Figur 1 gezeigten Stellungen gehalten bzw. in diese gedrängt. Außerdem sind Pilotleitungen 66 bzw. 66' vorgesehen, die dazu dienen, die Druckregelventile 46 bzw. 46' entgegen der Wirkung der Federn 64 bzw. 64' zu bewegen. Schließlich sind Leitungen 68 bzw. 68' vorgesehen, die die Anschlüsse 52 bzw. 52' mit den Ein-und Ausgangsseiten der zweiten Motoren 72 verbinden. Die Druckregelventile 46, 46' sind in dem hydraulischen Antriebssystem vorgesehen, um die zweiten Motoren 72 mit einem gegenüber dem ersten Motor 30 geringeren Druck und somit die zweiten Räder 14R, 14L mit einem geringeren Drehmoment anzutreiben, da die zusätzlich antreibbaren Räder 14L, 14R nicht immer angetrieben werden und daher bei einer geringeren Radlast mit geringerem Drehmoment angetrieben werden sollen.

Die Funktion des zuvor beschriebenen hydraulischen Antriebssystems ergibt sich wie folgt.

Es wird im folgenden davon ausgegangen, daß die Pumpe 28 Druckflüssigkeit in die Leitung 32 einspeist, um eine Seite, also die Eingangsseite, des ersten Motors 30 unter Druck zu setzen, während die Leitung 34 die unter einem geringeren Druck stehende und von der Ausgangsseite des ersten Motors 30 herkommende Flüssigkeit der Ansaugseite der Pumpe 28 zuführt. Es wird zudem angenommen, daß das Ventil 40 eine Stellung einnimmt, in der es die Leitungen 32 bzw. 34 mit den Leitungen 42 bzw. 44 verbindet, um so die Antriebseinheiten 69, 70 über die zweiten Motoren 72 anzutreiben. Außerdem werden unter diesen Ausgangsvoraussetzungen die Druckregelventile 46 und 46' durch die ihnen zugeordneten Federn 64 und 64' in ihre ersten und in den Figuren dargestellten Stellungen gebracht, so daß die Leitung 42 mit der einen Seite der zweiten Motoren 72 über die Anschlüsse 50 und 52 verbunden ist.

Sobald der Flüssigkeitsdruck in der Leitung 68 den vorbestimmten Auslegungsdruck der zweiten Motoren 72 von ca. 300 bar (4300 psi) überschreitet, bewirkt dieser über die Pilotleitung 66 auch an dem Druckregelventil 46 anstehende Druck, daß das Druckregelventil 46 in Richtung auf seine zweite Stellung geschoben wird und so den von der Leitung 42 herkommenden Flüssigkeitsstrom zwischen den Anschlüssen 50 und 52 drosselt, und zwar so lange, bis der zwischen dem Druckregelventil 46 und dem zweiten Motor 72 herrschende Flüssigkeitsdruck dem Auslegungsdruck der zweiten Motoren 72 entspricht. Wenn beim bloßen Anblick der Zeichnung auch denkbar wäre, daß der Übergang zwischen den einzelnen Stellungen abrupt geschieht, so sind die Druckregelventile 46, 46' doch so ausgebildet, daß diese Übergänge allmählich vonstatten gehen.

Wenn die zweiten Motoren 72 bei gleicher Strömungsrichtung als Bremsen wirken, weil ein oder beide zweite Räder 14L, 14R auf glattem Untergrund durchdrehen und die ihnen zugehörigen Motoren 72 dieser zu schnellen Drehbewegung aufgrund der unveränderten Strömungsgeschwindigkeit nur in einem ganz geringen Maße folgen können, dann baut sich in der Leitung 68' durch den überdrehten Motor 72 ein Überdruck auf, der sich über die Pilotleitung 66' an dem Druckregelventil 46' aufbaut und dieses in eine dritte Stellung bewegt, in der die Leitung 68' über die Anschlüsse 52' und 54' mit der Leitung 60 verbunden wird. Auf diese Weise werden selbst bei einem Durchdrehen der zweiten Räder 14R, 14L der oder die zweiten Motoren 72 vor einem Überdruck geschützt, und die Flüssigkeit gelangt von der Leitung 68' über die Leitung 60 und die Nebenleitung 56 in die Leitung 68 zum Einlaß der zweiten Motoren 72. Für den Fall, daß ein Abströmen der Flüssigkeit durch den Anschluß 54' nicht ganz möglich sein sollte, kann diese auch über das Rückschlagventil 58' aus der Leitung 68' in die Leitung 44 gelangen. Selbstverständlich funktioniert das Druckregelventil 46 genauso, wenn die Förderrichtung der Pumpe 28 umgekehrt ist.

Figur 2 stellt eine Abwandlung des erfindungsgemäßen Antriebssystems dar, in der das bisherige Druckregelventil 46′ durch ein Druckregelventil 146 ersetzt worden ist. Das Druckregelventil 146 und das damit verbundene Antriebssystem sind gleich mit denen von Figur 1 mit der Ausnahme, daß das Druckregelventil 146 eine Betätigungsvorrichtung 80 enthält, die über eine Leitung 82 an ein von einer Bedienungsperson betätigbares Steuerventil 84 angeschlossen ist. In diesem Falle kann auch auf das Ventil 40 verzichtet und die Leitungen 32, 34 direkt mit den Leitungen 42, 44 verbunden werden. Die Betätigungsvorrichtung 80 dient dazu, das Druckregelventil 146 abhängig vom Willen der Bedienungsperson in seine zweite Stellung zu bringen, in der die Verbindung zwischen den Anschlüssen 50′, 52′ und 54′ unterbrochen wird. Insofern übernimmt das Steuerventil 84 die Funktion des Ventils 40 aus Figur 1, und zwar dadurch, daß bei einem in der Betätigungsvorrichtung 80 aufgebauten hohen Druck oder bei einem geringen Druck in dieser die Verbindung zwischen den Anschlüssen 50′ und 52′ unterbrochen bzw. ermöglicht und somit die Funktion der zweiten Motoren 72 ermöglicht oder verhindert wird.

Selbstverständlich wird auch das Druckregelventil 46 durch ein dem Druckregelventil 146 entsprechendes Druckregelventil ersetzt, um die Steuerung der zweiten Motoren 72 auch bei einer umgekehrten Förderrichtung der Pumpe 28 zu ermöglichen.


**Ansprüche**

1. Hydraulisches Antriebssystem für antreibbare zweite Räder (14L, 14R) eines Kraftfahrzeuges mit einer Pumpe (28), einem ersten Motor (30) für erste Räder und mindestens einem zweiten Motor (72) für die zweiten Räder (14L, 14R), dadurch gekennzeichnet, daß zwischen der Pumpe (28) und dem zweiten Motor (72) ein Druckregelventil (46, 46′, 146) vorgesehen ist.

2. Hydraulisches Antriebssystem nach Anspruch 1, dadurch gekennzeichnet, daß das Druckregelventil (46, 46′, 146) in Abhängigkeit von dem an dem zweiten Motor (72) anstehenden Druck pilotsteuerbar ist.

3. Hydraulisches Antriebssystem nach Anspruch 1, wobei zwei zweite Motoren (72) vorgesehen sind, die jeweils einen Ausgang und einen Eingang aufweisen, dadurch gekennzeichnet, daß die Aus-und Eingänge in Abhängigkeit von dem an den zweiten Motoren (72) anstehenden Druck über jeweils ein Druckregelventil (46, 46′, 146) miteinander verbindbar sind.

4. Hydraulisches Antriebssystem nach Anspruch 3, dadurch gekennzeichnet, daß der Ausgang des einen zweiten Motors (72) mit dem Eingang des anderen zweiten Motors (72) und mit einem Eingang der Pumpe (28) verbindbar ist.

5. Hydraulisches Antriebssystem nach Anspruch 3, dadurch gekennzeichnet, daß das (die) Druckregelventil(e) (46, 46′, 146) drei Stellungen einnehmen kann (können), und zwar die Stellungen

1. in der die Pumpe (28) mit dem zweiten Motor (72) verbunden ist,

2. in der die Verbindungen zur Pumpe (28) und zu dem zweiten Motor (72) unterbrochen sind und

3. in der der Ausgang des einen zweiten Motors (72) mit dem Ausgang des anderen zweiten Motors (72) verbunden ist.

6. Hydraulisches Antriebssystem nach Anspruch 5, dadurch gekennzeichnet, daß das (die) Druckregelventil(e) (146) mittels einer zusätzlichen separaten Betätigungsvorrichtung (80) in ihre Stellung 2 bringbar ist (sind).

7. Hydraulisches Antriebssystem nach Anspruch 3, dadurch gekennzeichnet, daß zwischen den zweiten Motoren (72) und der Pumpe (28) in Richtung auf die Pumpe (28) öffnende Rückschlagventile (58, 58′) vorgesehen sind.

0 231 802

*Fig. I*

*Fig. 2*